# EUROPEAN PATENT APPLICATION

(11) **EP 3 412 510 A1**
(43) Date of publication of application: **12.12.2018**
(21) Application number: 17747179.4
(22) Date of filing: 13.01.2017
(51) Int. Cl.: B60R 1/074

(54) **VIEWING DEVICE FOR VEHICLE**

(30) Priority: 03.02.2016 JP 2016019090
(71) Applicant: Kabushiki Kaisha Tokai-Rika-Denki-Seisakusho, Niwa-gun, Aichi 480-0195 (JP)
(72) Inventor: YOSHIDA, Shigeki, Niwa-gun Aichi 480-0195 (JP)
(74) Representative: TBK
(86) International application number: PCT/JP2017/001137
(87) International publication number: WO 2017/135017

(57) **Abstract**

In a stowing mechanism (14) of a vehicle door mirror device (10), a clutch plate (36) restricts rotation of a gear plate (34), and a motor (26) is driven such that rotation force acts on the gear plate (34) and a swing body (18) is rotated. Note that a coil spring (38) biases the clutch plate (36) in the direction of rotation. This enables deformation of the coil spring (38) to be suppressed, even when rotation force is input to the coil spring (38) from the gear plate (34) through the clutch plate (36) when the motor (26) is driven.

## Description

### Technical Field

The present invention relates to a viewing device for vehicle in which a visual recognition means assists the visual recognition of a vehicle occupant.

### Background Art

In an automobile door mirror device disclosed in Japanese Patent Application Laid-Open (JP-A) No. 2000-85470, a coil spring biases a clutch toward a main gear, the clutch restricts rotation of the main gear, and drive force from a motor acts on the main gear to swing a mirror.

Note that in this automobile door mirror device, when drive force from the motor acts on the main gear and the coil spring undergoes elastic deformation through the main gear and the clutch in a rotation direction of the main gear such that drive force from the motor no longer acts on the main gear, the coil spring undergoes elastic recovery, and there is a possibility that, for example, a scraping noise (abnormal noise) of the main gear against the clutch occurs.

### SUMMARY OF INVENTION

### Technical Problem

In consideration of the above circumstances, an object of the present invention is to obtain a viewing device for a vehicle capable of suppressing a biasing means from deforming in a rotation direction of a rotation member when drive force acts on the rotation member. Solution to Problem

A viewing device for a vehicle of a first aspect of the present invention includes a rotation member that is provided so as to be capable of rotating, a restricting member that restricts rotation of the rotation member, a visual recognition means that assists visual recognition by a vehicle occupant, and that is swung by drive force acting on the rotation member, and a biasing means that causes biasing force in a rotation direction of the rotation member to act on one from out of the rotation member or the restricting member.

A viewing device for a vehicle of a second aspect of the present invention is the viewing device for a vehicle of the first aspect of the present invention, wherein the biasing means causes biasing force to act on the restricting member.

A viewing device for a vehicle of a third aspect of the present invention is the viewing device for a vehicle of the first aspect or the second aspect of the present invention, wherein the biasing means causes biasing force from a length direction end face of the biasing means to act on one from out of the rotation member or the restricting member.

A viewing device for a vehicle of a fourth aspect of the present invention is the viewing device for a vehicle of any one of the first to the third aspect of the present invention, further including a contact face that is provided to one from out of the rotation member or the restricting member, that the biasing means makes contact with, and that is inclined such that a contact surface area between the biasing means and the one from out of the rotation member or the restricting member is increased.

### Advantageous Effects of Invention

In the viewing device for a vehicle of the first aspect of the present invention, the restricting member restricts rotation of the rotation member, and the visual recognition means assists visual recognition by a vehicle occupant. The visual recognition means is swung by drive force acting on the rotation member.

Note that the biasing means causes biasing force in the rotation direction of the rotation member to act on one from out of the rotation member or the restricting member. This enables deformation of the biasing means in the rotation direction of the rotation member through the rotation member to be suppressed, even when drive force acts on the rotation member.

In the viewing device for vehicle of the second aspect of the present invention, the biasing means causes biasing force to act on the restricting member. This enables the rotation member to be suppressed from moving when the restriction on rotation of the rotation member by the restricting member is released.

In the viewing device for a vehicle of the third aspect of the present invention, the biasing means causes biasing force from the length direction end face of the biasing means to act on one from out of the rotation member or the restricting member. This biasing means can thereby effectively cause biasing force to act on the one from out of the rotation member or the restricting member.

In the viewing device for a vehicle of the fourth aspect of the present invention, the contact face that is provided to one from out of the rotation member or the restricting member. The biasing means makes contact with the contact face, and the contact face is inclined such that the contact surface area between the biasing means and the one from out of the rotation member or the restricting member is increased. This enables a region where the biasing means biases the one from out of the rotation member or the restricting member to be increased.

### BRIEF DESCRIPTION OF DRAWINGS

Fig. 1 is a face-on view illustrating a vehicle door mirror device according to an exemplary embodiment of the present invention, as viewed from a vehicle rear.
Fig. 2 is a face-on view illustrating a stowing mechanism in a vehicle door mirror device according to an exemplary embodiment of the present invention, as viewed from a vehicle rear.
Fig. 3 is a cross-section illustrating a stowing mechanism in a vehicle door mirror device according to an exemplary embodiment of the present invention, as viewed from a vehicle rear.
Fig. 4 is a cross-section (taken along line 4-4 in Fig. 2) illustrating a stowing mechanism in a vehicle door mirror device according to an exemplary embodiment of the present invention, as viewed from above.
Fig. 5 is an exploded perspective view illustrating a coil spring and a clutch plate of a stowing mechanism in a vehicle door mirror device according to an exemplary embodiment of the present invention.

### DESCRIPTION OF EMBODIMENTS

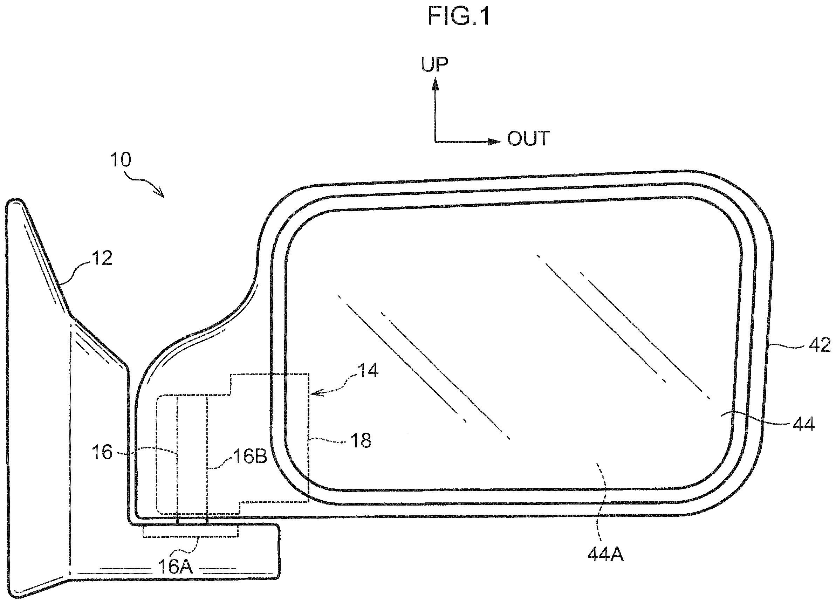

Fig. 1 is a face-on view illustrating a vehicle door mirror device 10 serving as a viewing device for vehicle according to an exemplary embodiment of the present invention, as viewed from a vehicle rear. Note that in the drawings, the arrow FR indicates a vehicle front, the arrow OUT indicates a vehicle width direction outside (a vehicle right side), and the arrow UP indicates an upper side.

The vehicle door mirror device 10 according to the present exemplary embodiment is provided to an up-down direction intermediate portion of, and a vehicle front side end of, a side door serving as a vehicle door (in particular a front side door), and is disposed on the outside of the vehicle.

As illustrated in Fig. 1, the vehicle door mirror device 10 includes a stay 12 serving as an installation member. The vehicle door mirror device 10 is installed to the side door by fixing a vehicle width direction inside end of the stay 12 to the side door (the vehicle body side).

A stowing mechanism 14 (electric stowing mechanism, retractor) serving as a swing mechanism is supported at an upper side of a vehicle width direction outside portion of the stay 12.

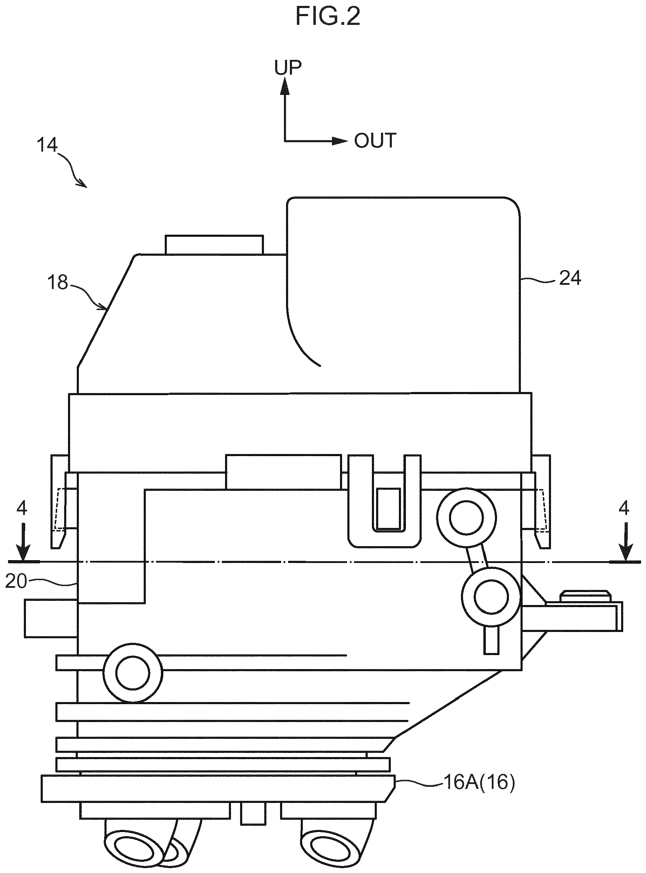

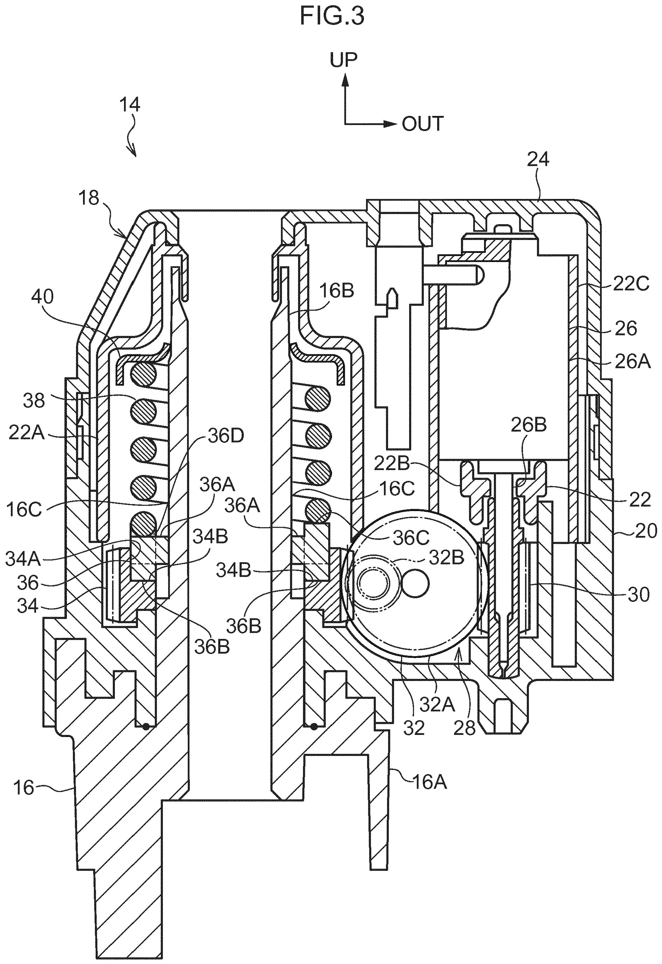

As illustrated in Fig. 2 to Fig. 4, a stand 16 made of metal and serving as a support body is provided to the stowing mechanism 14. A substantially disc shaped fixing portion 16A is provided to a lower end of the stand 16. The stand 16 is fixed to the stay 12 by fixing the fixing portion 16A to the stay 12, and the stowing mechanism 14 is supported by the stay 12. A substantially circular tube shaped support shaft 16B is integrally provided to an upper side of the fixing portion 16A, and the support shaft 16B is disposed with its axial direction in the up-down direction. A predetermined number (four in the present exemplary embodiment) of insertion grooves 16C, each with a substantially rectangular shaped cross-section and serving as an anchor portion, are formed in an outer circumferential face of the support shaft 16B. The predetermined number of insertion grooves 16C are disposed at uniform spacings around the circumferential direction of the support shaft 16B. The insertion grooves 16C extend along the axial direction of the support shaft 16B and the insertion grooves 16C are open toward the upper side.

A swing body 18 is supported by the support shaft 16B so as to be capable of swinging.

A container-shaped case 20 made of resin and serving as a swinging member, is provided at a lower side portion of the swing body 18. An upper face of the case 20 is open. The support shaft 16B of the stand 16 penetrates and fits together with a vehicle width direction inside portion of a lower wall of the case 20. The case 20 is supported by the support shaft 16B so as to be capable of swinging.

A motor base 22 made of resin and serving as an assembly member, is fixed inside an upper portion of the case 20. A substantially circular tube shaped housing tube 22A is provided to a vehicle width direction inside portion of the motor base 22. The support shaft 16B of the stand 16 is coaxially housed inside the housing tube 22A. A substantially rectangular plate shaped bottom wall 22B is provided at a vehicle width direction outside portion of the motor base 22. The bottom wall 22B is integrally formed to a lower end portion of the housing tube 22A. A substantially elliptical tube shaped assembly tube 22C is integrally provided to an upper face of the bottom wall 22B. The assembly tube 22C projects out from the bottom wall 22B toward the upper side.

A container-shaped cover 24 made of resin and serving as a covering member, is provided at an upper side of the case 20 and the motor base 22. A lower face of the cover 24 is open. A lower end of the cover 24 is fixed to an upper end portion outer perimeter of the case 20. The cover 24 covers the upper side of the case 20 and the motor base 22.

A motor 26 serving as a drive means is provided inside the swing body 18. A substantially elliptical column shaped main portion 26A is provided to the motor 26. The main portion 26A is assembled from the upper side into the assembly tube 22C of the motor base 22, and fixed thereto. A metal output shaft 26B (motor shaft) extends coaxially from the main portion 26A. The axial direction of the output shaft 26B is disposed in the up-down direction. The output shaft 26B penetrates the bottom wall 22B of the motor base 22 and extends toward the lower side of the motor base 22. The stowing mechanism 14 is operated by driving the motor 26 to rotate the output shaft 26B.

A gear mechanism 28 is provided inside the case 20.

A worm gear 30, made of resin and serving as a first stage gear, is provided to the gear mechanism 28 at the lower side of the motor 26. The worm gear 30 is disposed with its axial direction in the up-down direction, and a lower portion of the worm gear 30 is supported by the lower wall of the case 20 so that the worm gear 30 is rotatable. The output shaft 26B of the motor 26 is coaxially inserted into the worm gear 30 from the upper side, and the output shaft 26B rotates such that the worm gear 30 rotates as a unit together with the output shaft 26B.

A worm shaft 32 serving as an intermediate gear is provided to the gear mechanism 28 at a vehicle width direction inside of the worm gear 30. The worm shaft 32 is disposed with its axial direction in the horizontal direction, and is supported by the lower wall of the case 20 so as to be rotatable. A helical gear portion 32A made of resin is coaxially provided to the worm shaft 32 at one end side portion (a vehicle rear side portion) of the worm shaft 32, and a worm gear portion 32B made of metal and serving as a worm is coaxially provided to the worm shaft 32 at another end side portion (a vehicle front side portion) of the worm shaft 32. The helical gear portion 32A meshes together with the worm gear 30, and rotating the worm gear 30 rotates the worm shaft 32 such that the helical gear portion 32A and the worm gear portion 32B rotate together as a unit.

A gear plate 34 (worm wheel), made of metal and serving as a rotation member (final gear), is provided to the gear mechanism 28 at the vehicle width direction inside of the worm shaft 32. The support shaft 16B of the stand 16 coaxially penetrates the gear plate 34. The gear plate 34 is supported by the support shaft 16B so as to be rotatable, and is supported from the lower side by the lower wall of the case 20.

A recessed portion 34A having a circular shape in plan view is coaxially formed in an upper face of the gear plate 34. The recessed portion 34A is open toward the upper side. A predetermined number of (five, in the present exemplary embodiment) detent indents 34B serving as engaged portions are formed in a lower face of the recessed portion 34A. The predetermined number of detent indents 34B are disposed at uniform intervals around the circumferential direction of the gear plate 34. The detent indents 34B have inverted trapezoidal shapes in cross-section. Both side faces of each detent indent 34B are respectively inclined along directions toward the upper side on progression toward the gear plate 34 circumferential direction outside of the detent indent 34B.

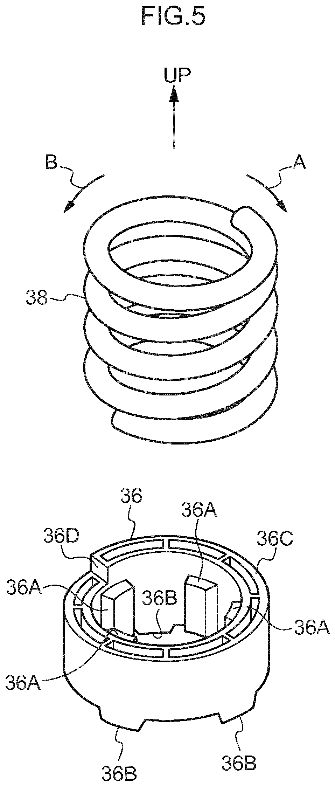

A substantially circular cylinder shaped clutch plate 36 (see Fig. 5), made of metal and serving as a restricting member, is provided at the upper side of the gear plate 34. The support shaft 16B of the stand 16 coaxially penetrates the clutch plate 36. The clutch plate 36 is fitted into the recessed portion 34A of the gear plate 34. A predetermined number (four in the present exemplary embodiment) of substantially rectangular column-shaped insertion projections 36A, serving as anchored portions, are formed in an inner circumferential face of the clutch plate 36. The predetermined number of insertion projections 36A are disposed at uniform spacings around the circumferential direction of the clutch plate 36 and each extend along the axial direction of the clutch plate 36. The insertion projections 36A are inserted (substantially fitted in the circumferential direction of the support shaft 16B and the clutch plate 36) into the insertion grooves 16C of the support shaft 16B. The clutch plate 36 is thereby anchored against rotating with respect to the support shaft 16B, but is capable of moving in the up-down direction with respect to the support shaft 16B.

A predetermined number of (five, in the present exemplary embodiment) detent protrusions 36B serving as engaging portions are formed in a lower face of the clutch plate 36. The predetermined number of detent protrusions 36B are disposed at uniform intervals around the circumferential direction of the clutch plate 36. The detent protrusions 36B have inverted trapezoidal shapes in cross-section. Both side faces of each detent protrusion 36B are respectively inclined along directions toward the lower side on progression toward the clutch plate 36 circumferential direction inside of the detent protrusion 36B. The cross-sectional shape of the detent protrusions 36B is configured slightly smaller than, and in a similar shape to, the cross-sectional shape of the detent indents 34B of the gear plate 34. The lower face of the clutch plate 36 makes contact with (is anchored to) the lower face of the recessed portion 34A of the gear plate 34 by the detent protrusions 36B being inserted into the detent indents 34B (being substantially fitted in the circumferential direction of the gear plate 34 and the clutch plate 36).

A contact face 36C is formed on an upper face of the clutch plate 36. The contact face 36C is inclined in a downward direction on progression about a rearward tilt direction (the arrow A direction in Fig. 5 and so on). A flat biasing face 36D is formed to the upper face of the clutch plate 36 between a rearward tilt direction side end and a forward tilt direction (see the arrow B direction in Fig. 5 and so on) side end of the contact face 36C. The biasing face 36D is disposed so as to be perpendicular to the circumferential direction of the clutch plate 36.

A helix shaped metal coil spring 38 (see Fig. 5) with a circular cross-section, serving as a biasing means, is provided at the upper side of the clutch plate 36. The support shaft 16B of the stand 16 is coaxially inserted through the inside of the coil spring 38, and the coil spring 38 extends downward on progression about the rearward tilt direction. A lower end of the coil spring 38 makes contact with the contact face 36C of the clutch plate 36. A length direction lower side end face of the coil spring 38 has a flat face shape, and makes contact with (is anchored to) the biasing face 36D of the clutch plate 36.

A substantially circular ring plate-shaped bush nut 40, serving as an anchor member, is provided at the upper side of the coil spring 38. The bush nut 40 is coaxially fixed to the support shaft 16B of the stand 16.

The bush nut 40 presses the coil spring 38 toward the lower side and compresses the coil spring 38 in its axial direction. The lower end of the coil spring 38 biases the contact face 36C of the clutch plate 36 toward the lower side, such that the coil spring 38 biases the clutch plate 36 toward the lower side. Biasing force toward the lower side from the coil spring 38 causes the clutch plate 36 to engage with the gear plate 34, such that a state in which the detent protrusions 36B of the clutch plate 36 have been inserted into the detent indents 34B of the gear plate 34 is maintained and rotation of the gear plate 34 is restricted by the clutch plate 36.

The bush nut 40 presses a length direction upper side end face of the coil spring 38 toward the rearward tilt direction side, causing the diameter of the coil spring 38 to elastically expand. The length direction lower side end face of the coil spring 38 biases the biasing face 36D of the clutch plate 36 toward the rearward tilt direction side, such that the coil spring 38 biases the clutch plate 36 toward the rearward tilt direction side. The biasing force toward the rearward tilt direction side from the coil spring 38 thereby causes rearward tilt direction side faces of the detent protrusions 36B of the clutch plate 36 to abut rearward tilt direction side faces of the detent indents 34B of the gear plate 34, and causes rearward tilt direction side faces of the insertion projections 36A of the clutch plate 36 to abut rearward tilt direction side faces of the insertion grooves 16C of the stand 16 (support shaft 16B).

The gear plate 34 is meshed together with the worm gear portion 32B of the worm shaft 32, such that the worm gear portion 32B is anchored against swinging about the gear plate 34, and the swing body 18 is anchored against swinging with respect to the gear plate 34. As described above, when the worm gear portion 32B is rotated, the worm gear portion 32B swings about the gear plate 34 such that the swing body 18 swings as a unit together with the worm gear portion 32B with respect to the gear plate 34.

As illustrated in Fig. 1, the swing body 18 is housed within a vehicle width direction inside portion of a substantially cuboid container-shaped visor 42 serving as a housing member. A vehicle rear side face of the visor 42 is open. A substantially rectangular plate shaped mirror 44, serving as a visual recognition means, is disposed inside the visor 42 in the vicinity of the vehicle rear side face (an open portion) of the visor 42. The visor 42 covers the entire periphery and a vehicle front side face of the mirror 44.

The visor 42 and the mirror 44 are coupled to and supported by the swing body 18. The visor 42 and the mirror 44, together with the swing body 18, project out with respect to the side door so as to flip out (open out) toward the vehicle width direction outside. A mirror face 44A of the mirror 44 is oriented toward the vehicle rear side. Accordingly, the mirror 44 enables a vehicle occupant (in particular the driver) to see behind the vehicle, and assists visual recognition by the vehicle occupant. Further, the visor 42 and the mirror 44 are capable of swinging together with the swing body 18 as a unit about the support shaft 16B of the stand 16.

Explanation follows regarding operation of the present exemplary embodiment.

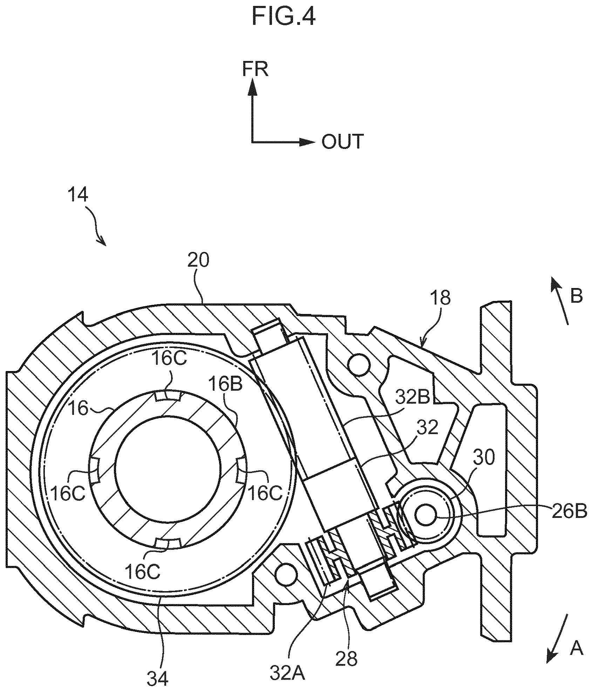

In the stowing mechanism 14 of the vehicle door mirror device 10 configured as above, biasing force toward the lower side from the coil spring 38 causes the clutch plate 36 to engage with the gear plate 34 (maintaining a state in which the detent protrusions 36B of the clutch plate 36 are inserted into the detent indents 34B of the gear plate 34), such that rotation of the gear plate 34 with respect to the clutch plate 36 in the rearward tilt direction (the direction of arrow A in Fig. 4, and so on) and the forward tilt direction (the direction of arrow B in Fig. 4, and so on) is restricted, and rotation of the swing body 18, the visor 42, and the mirror 44 in the rearward tilt direction (rear stowing direction) and the forward tilt direction (front stowing direction) is restricted.

When the stowing mechanism 14 is operated, the motor 26 is driven to rotate the output shaft 26B. Accordingly, in the gear mechanism 28, the worm gear 30 rotates as a unit together with the output shaft 26B, rotating the worm shaft 32 (the helical gear portion 32A and the worm gear portion 32B) to swing the worm gear portion 32B about the gear plate 34, swinging the swing body 18, the visor 42, and the mirror 44 together as a unit with the worm gear portion 32B with respect to the gear plate 34.

When the motor 26 is driven such that the output shaft 26B rotates in one direction, the worm gear portion 32B swings in the rearward tilt direction about the gear plate 34, and the swing body 18, the visor 42, and the mirror 44 swing in the rearward tilt direction (toward the vehicle rear side and the vehicle width direction inside). Accordingly, projection of the swing body 18, the visor 42, and the mirror 44 from the side door is eliminated, and the swing body 18, the visor 44, and the mirror 46 are stowed (stowed to the rear).

Then, when the motor 26 is driven such that the output shaft 26B rotates in another direction, the worm gear portion 32B swings in the forward tilt direction about the gear plate 34, and the swing body 18, the visor 42, and the mirror 44 swing in the forward tilt direction (toward the vehicle front side and the vehicle width direction outside). The swing body 18, the visor 42, and the mirror 44 flip out (are returned) so as to project from the side door.

Further, when external force from a large load in one out of the rearward tilt direction or the forward tilt direction acts on at least one of the visor 42 or the mirror 44, rotational force from the large load in the one out of the rearward tilt direction or the forward tilt direction is input to the gear plate 34 from the worm gear portion 32B of the swing body 18. Accordingly, the clutch plate 36 moves towards the upper side with respect to the gear plate 34 against the biasing force toward the lower side from the coil spring 38, the clutch plate 36 is disengaged from the gear plate 34 (the detent protrusions 36B come out from the detent indents 34B), and rotation of the gear plate 34 in the one out of the rearward tilt direction or the forward tilt direction with respect to the clutch plate 36 is permitted by the lower face of the recessed portion 34A of the gear plate 34 being disposed at the lower side of the detent protrusions 36B, permitting the swing body 18, the visor 42, and the mirror 44 to be swung in the one out of the rearward tilt direction or the forward tilt direction.

Then, when external force in the rearward tilt direction or the forward tilt direction acts on at least one of the visor 42 or the mirror 44, or when the motor 26 is driven such that the worm gear portion 32B rotates, rotational force in the rearward tilt direction or the forward tilt direction is input to the gear plate 34 from the worm gear portion 32B. Accordingly, the gear plate 34 rotates in the rearward tilt direction or the forward tilt direction with respect to the clutch plate 36, and rotation of the gear plate 34 in the rearward tilt direction and the forward tilt direction with respect to the clutch plate 36 is restricted by the biasing force toward the lower side from the coil spring 38 causing the clutch plate 36 to move toward the lower side and engage the gear plate 34 (to insert the detent protrusions 36B into the detent indents 34B), restricting rotation of the swing body 18, the visor 42, and the mirror 44 in the rearward tilt direction and the forward tilt direction.

The coil spring 38 biases the clutch plate 36 toward the rearward tilt direction side, causing the rearward tilt direction side faces of the detent protrusions 36B of the clutch plate 36 to abut the rearward tilt direction side faces of the detent indents 34B of the gear plate 34, and causing the rearward tilt direction side faces of the insertion projections 36A of the clutch plate 36 to abut the rearward tilt direction side faces of the insertion grooves 16C of the stand 16 (support shaft 16B).

Thus, when the motor 26 is driven to swing the worm gear portion 32B in the forward tilt direction about the gear plate 34, rotation force in the rearward tilt direction is input to the gear plate 34 from the worm gear portion 32B, and the gear plate 34 is anchored against the rotation force in the rearward tilt direction by the rearward tilt direction side faces of the insertion projections 36A abutting the rearward tilt direction side faces of the insertion grooves 16C. Thus, rotation force in the rearward tilt direction from the gear plate 34 is not input to the coil spring 38 through the clutch plate 36.

However, when the motor 26 is driven to swing the worm gear portion 32B in the rearward tilt direction about the gear plate 34, rotation force in the forward tilt direction is input to the gear plate 34 from the worm gear portion 32B, and rotation force in the forward tilt direction is input to the coil spring 38 from the gear plate 34 through the clutch plate 36. When driving of the motor 26 is then stopped, rotation force in the forward tilt direction input to the coil spring 38 is eliminated.

Note that as described above, the coil spring 38 biases the clutch plate 36 in the rearward tilt direction.

Thus, even when rotation force in the forward tilt direction is input to the coil spring 38 when the motor 26 is driven, the coil spring 38 can be suppressed from undergoing elastic deformation (torsional deformation) in the forward tilt direction. Thus, even when input of rotation force in the forward tilt direction to the coil spring 38 ceases when driving of the motor 26 is then stopped, the coil spring 38 can be suppressed from undergoing elastic recovery in the rearward tilt direction. Metal-on-metal noises of the clutch plate 36 (insertion projections 36A) against the stand 16 (insertion grooves 16C), metal-on-metal noises of the clutch plate 36 (detent protrusions 36B) against the gear plate 34 (detent indents 34B), and metal-on-metal noises of the gear plate 34 (detent indents 34B) against the worm shaft 32 (worm gear portion 32B) due to the coil spring 38 undergoing elastic recovery in the rearward tilt direction can thereby be suppressed from occurring. Moreover, the coil spring 38 is suppressed from undergoing elastic deformation in the forward tilt direction when the motor 26 is driven, thereby obviating the need to apply lubricant (grease) between the coil spring 38 and the clutch plate 36 or between the coil spring 38 and the bush nut 40, enabling costs to be reduced.

The coil spring 38 causes biasing force toward the rearward tilt direction side to act on the clutch plate 36. Thus, when the clutch plate 36 is disengaged from the gear plate 34 (when the detent protrusions 36B come out from the detent indents 34B) and the restriction on rotation of the gear plate 34 by the clutch plate 36 is released, the clutch plate 36 is able to move toward the upper side with respect to the gear plate 34. Thus, the gear plate 34 can be suppressed from moving with respect to the clutch plate 36 regardless of the gear plate 34 being meshed with the worm gear portion 32B, unlike in cases in which the coil spring 38 causes biasing force toward the rearward tilt direction side to act on the gear plate 34.

Moreover, due to the length direction lower side end face of the coil spring 38 making contact with the biasing face 36D of the clutch plate 36, biasing force toward the rearward tilt direction side acts on the clutch plate 36 from the length direction lower side end face of the coil spring 38. This enables biasing force toward the rearward tilt direction side to effectively act on the clutch plate 36 from the coil spring 38. This also obviates the need to bend a length direction lower side end portion of the coil spring 38 in order to anchor the length direction lower side end portion of the coil spring 38 in the circumferential direction of the clutch plate 36, enabling costs to be reduced.

Similarly to the length direction of the coil spring 38, the contact face 36C of the clutch plate 36 is inclined downward on progression about the rearward tilt direction, and the lower end of the coil spring 38 makes contact with the entire circumference of the clutch plate 36 (the contact surface area between the coil spring 38 and the clutch plate 36 is increased). This enables the coil spring 38 to bias the entire circumference of the clutch plate 36 toward the lower side (enables a biasing region of the clutch plate 36 to be increased). This obviates the need, for example, to machine the lower face of the coil spring 38 so as to be perpendicular to the axial direction of the coil spring 38 in order that the coil spring 38 biases the clutch plate 36 toward the lower side uniformly around its entire circumference, enabling costs to be reduced.

Note that in the present exemplary embodiment, the coil spring 38 biases the clutch plate 36 toward the rearward tilt direction side. However, the coil spring 38 may bias the clutch plate 36 toward the forward tilt direction side.

In the present exemplary embodiment, the coil spring 38 biases the clutch plate 36 toward the rearward tilt direction side. However, the coil spring 38 may bias the gear plate 34 toward the rearward tilt direction side or the forward tilt direction side.

In the present exemplary embodiment, the coil spring 38 biases the clutch plate 36 toward the rearward tilt direction side. However, a biasing means other than the coil spring 38 may bias the clutch plate 36 or the gear plate 34 toward the rearward tilt direction side or the forward tilt direction side.

Additionally, in the above exemplary embodiment, the viewing device for vehicle of the present invention is the vehicle door mirror device 10. However, the viewing device for vehicle of the present invention may be another vehicle mirror device (another vehicle outer mirror device outside the vehicle (for example, a vehicle fender mirror device) or a vehicle inner mirror device inside the vehicle), a vehicle camera device (that captures images to assist visual recognition by the vehicle occupant), or the like.

The entire content of the disclosure of Japanese Patent Application No. 2016-19090 filed on February 3, 2016 is incorporated by reference in the present specification.

### Explanation of the Reference Numerals

- 10: vehicle door mirror device (viewing device for a vehicle)
- 34: gear plate (rotation member)
- 36: clutch plate (restricting member)
- 36C: contact face
- 38: coil spring (biasing means)
- 44: mirror (visual recognition means)

## Claims

1. A viewing device for a vehicle comprising:
a rotation member that is provided so as to be capable of rotating;
a restricting member that restricts rotation of the rotation member;
a visual recognition means that assists visual recognition by a vehicle occupant, and that is swung by drive force acting on the rotation member; and
a biasing means that causes biasing force in a rotation direction of the rotation member to act on one from out of the rotation member or the restricting member.

2. The viewing device for a vehicle of claim 1, wherein the biasing means causes biasing force to act on the restricting member.

3. The viewing device for a vehicle of claim 1 or claim 2, wherein the biasing means causes biasing force from a length direction end face of the biasing means to act on one from out of the rotation member or the restricting member.

4. The viewing device for a vehicle of any one of claim 1 to claim 3, further comprising:
a contact face that is provided to one from out of the rotation member or the restricting member, that the biasing means makes contact with, and that is inclined such that a contact surface area between the biasing means and the one from out of the rotation member or the restricting member is increased.

5. The viewing device for a vehicle of any one of claim 1 to claim 4, wherein:
the restricting member uses the biasing force of the biasing means to restrict rotation of the rotation member; and
the restricting member permits rotation of the rotation member against the biasing force of the biasing means.
